# EUROPÄISCHE PATENTSCHRIFT

(11) **EP 4 327 080 B1**
(45) Veröffentlichungstag und Bekanntmachung des Hinweises auf die Patenterteilung: **21.05.2025**
(21) Anmeldenummer: 22712919.4
(22) Anmeldetag: 08.03.2022
(51) Int. Cl.: G01N 21/88, G01N 21/95, G01B 11/245

(54) **PRÜFVORRICHTUNG ZUM KONTROLLIEREN VON BAUTEILOBERFLÄCHEN UND VERFAHREN DAFÜR**
INSPECTION DEVICE FOR CHECKING COMPONENT SURFACES, AND METHOD THEREFOR
DISPOSITIF D'INSPECTION POUR VÉRIFICATION DE SURFACES DE COMPOSANTS, ET PROCÉDÉ ASSOCIÉ

(30) Priorität: 21.04.2021 DE 102021110149
(43) Veröffentlichungstag der Anmeldung: 28.02.2024
(73) Patentinhaber: GeneSys Elektronik GmbH, 77652 Offenburg (DE)
(72) Erfinder: BROOKINS, Jonathan, 77749 Hohberg (DE); HERRMANN, Lukas, 77746 Schutterwald (DE); HUBER, David, 77654 Offenburg (DE); HUBER, Bertold, 77654 Offenburg (DE)
(74) Vertreter: Müller Hoffmann & Partner
(86) Internationale Anmeldenummer: PCT/EP2022/055916
(87) Internationale Veröffentlichungsnummer: WO 2022/223196

(56) Entgegenhaltungen:
- EP-A1- 2 251 639
- CN-A- 110 823 902
- US-A1- 2015 373 319
- US-B1- 7 075 565

## Beschreibung

Die Erfindung betrifft eine Prüfvorrichtung zum optischen Prüfen von Oberflächen eines Prüflings.

Die Oberflächenkontrolle von Bauteilen spielt insbesondere bei der Serienproduktion von hochwertigen umgeformten Metallteilen eine wichtige Rolle. In der Automobilindustrie wird zum Beispiel eine Oberflächenkontrolle für das Gehäuse von Fensterhebermotoren durchgeführt. Dabei können pro Minute zum Beispiel 60 bis 120 Teile durch eine Umformpresse hergestellt werden, wobei seitens des Herstellers eine 100%-ige Oberflächenkontrolle verlangt wird, und zwar einerseits aus kosmetischen Gründen und andererseits zur Erkennung von Materialfehlern, die sich nach dem Umformprozess an der Oberfläche zeigen.

Typische Merkmale, die im Rahmen einer Oberflächenkontrolle erkannt werden sollen, sind Kratzer, Risse, sogenannte Doppelungen (bogenförmige Materialstörungen) und Zinkabplatzer bei beschichteten Oberflächen.

Die Oberflächenkontrolle kann einerseits durch visuelle Prüfung durch Menschen durchgeführt werden. Dabei nimmt der Prüfer das zu prüfende Teil in die Hand und schwenkt bzw. dreht es geeignet im Licht, um charakteristische Oberflächenmerkmale zu finden.

Alternativ dazu kann ein Kamerasystem eingesetzt werden, bei dem die zu prüfenden Teile vereinzelt und in eine Bildverarbeitungsanlage geführt werden, die aus einer oder mehreren Stationen besteht.

Bei der visuellen Prüfung durch Menschen besteht das Problem stark schwankender Ergebnisse je nach individueller Wertung von Person zu Person. Darüber hinaus kann die Konzentration der prüfenden Person nachlassen.

Ein Kamerasystem hingegen erfordert einen hohen mechanischen Aufwand und ist unflexibel, da auf die vorher definierten Typen beschränkt.

Aus der US 2015/373319 A1 ist eine Prüfvorrichtung bekannt, zum Erfassen von 3D-Umrissen räumlicher Körper. Die Vorrichtung weist zwei Halbschalen auf, in deren Innerem eine in zwei Teile geteilte Rahmenstruktur aufgenommen ist. In Ausnehmungen der Rahmenstruktur sind jeweils Platten gehalten, auf denen Kamera- und Lichteinheiten angeordnet sind. Mithilfe der Kamera- und Lichteinheiten können die zu erfassenden Körper unterschiedlichen Beleuchtungssituationen ausgesetzt werden.

In der US 7 075 565 B1 wird ein optisches Inspektionssystem beschrieben, mit mehreren Kameras und mehreren Beleuchtungsvorrichtungen.

Aus der EP 2 251 639 A1 ist eine Vorrichtung zum optischen Inspizieren eines Gegenstands bekannt, mit einem drehbaren Trägerelement, an dem eine Anzahl von Lichtquellen angeordnet ist. Eine Bildaufnahmeeinheit dient zum Aufnehmen einer Anzahl von Bildern von dem Gegenstand.

Die CN 110 823 902 A beschreibt ein Beispiel für den Einsatz einer Künstlichen Intelligenz bei der optischen Auswertung von Bildern.

Der Erfindung liegt die Aufgabe zugrunde, eine Prüfvorrichtung zum (teil-)automatisierten optischen Prüfen von Oberflächen eines Prüflings bereitzustellen, mit der bestehende Kamerasysteme verbessert werden können.

Die Aufgabe wird erfindungsgemäß durch eine Prüfvorrichtung mit den Merkmalen von Anspruch 1 gelöst. Vorteilhafte Ausgestaltungen sind in den abhängigen Ansprüchen angegeben.

Es wird eine Prüfvorrichtung zum optischen Prüfen von Oberflächen eines Prüflings angegeben, mit mehreren Bilderfassungsvorrichtungen, mehreren Beleuchtungsvorrichtungen und mit einem Prüfort, an dem ein zu prüfender Prüfling positionierbar ist, um einen Prüfvorgang durchzuführen, wobei die Bilderfassungsvorrichtungen und die Beleuchtungsvorrichtungen kuppelförmig um den Prüfort angeordnet sind, wobei jeweils mindestens eine der Bilderfassungsvorrichtungen und mindestens eine der Beleuchtungsvorrichtungen derart aktivierbar sind, dass die Beleuchtungsvorrichtung den Prüfling am Prüfort beleuchtet und die Bilderfassungsvorrichtung ein Bild des Prüflings am Prüfort erfasst, wobei durch eine Zuordnung von jeweils einer der Bilderfassungsvorrichtungen und einer der Beleuchtungsvorrichtungen und ihrer relativen Position zu dem Prüfling am Prüfort eine bestimmte Beleuchtungssituation definierbar ist, und wobei wenigstens eine oder nacheinander mehrere oder alle der Bilderfassungsvorrichtungen und wenigstens eine oder nacheinander mehrere oder alle der Beleuchtungsvorrichtungen derart aktivierbar sind, dass durch die Bilderfassungsvorrichtungen insgesamt eine Vielzahl von Bildern des Prüflings in unterschiedlichen Beleuchtungssituationen erfassbar ist.

Als Bilderfassungsvorrichtung eignen sich entsprechende digitale Kameras, insbesondere hochauflösende Kameras, die gut geeignet sind, um die Oberflächenstruktur des zu kontrollierenden Bauteils (des Prüflings) jeweils zu erfassen.

Die Beleuchtungsvorrichtungen können LEDs oder OLEDs aufweisen. Insbesondere können die Beleuchtungsvorrichtungen geeignet sein, um jeweils ein flächiges gleichmäßiges Licht auf den Prüfling zu strahlen.

Die Lichterzeugung durch die Beleuchtungsvorrichtungen kann je nach Anwendungsfall über einen längeren oder kürzeren Zeitraum dauern. So ist es möglich, das Licht z.B. für eine Sekunde dauerhaft zu erzeugen. Ebenso ist es aber auch möglich, das Licht nur blitzartig zu erzeugen, mit einer Blitzdauer im Bereich von tausendstel Sekunden.

Die Belichtungszeit kann z.B. im Bereich zwischen 0,2 bis 5 ms pro Beleuchtungsszenario liegen.

Die Anzahl der Bilder pro Prüfling (Bauteil) kann z.B. wenigstens bei der Anzahl der Bilderfassungsvorrichtungen liegen. Der Wert kann aber auch in Abhängigkeit vom Beleuchtungskonzept höher liegen, z.B. um den Faktor n.

Die Anzahl der Beleuchtungsvorrichtungen kann in sinnvoller Weise gewählt werden. Dabei hat sich ergeben, dass zum Beispiel mit 9 bis 15, insbesondere mit 12 Beleuchtungsvorrichtungen das üblicherweise vom Menschen durchgeführte Schwenken des Prüflings im Licht einer einzigen Beleuchtungsquelle gut simuliert werden kann. Je nach Bedarf können aber auch mehr oder weniger Beleuchtungsvorrichtungen eingesetzt werden.

Die Bilderfassungsvorrichtungen und die Beleuchtungsvorrichtungen müssen derart ausgerichtet sein, dass sie den Prüfort erfassen, um Bilder von den beleuchteten Prüflingen erstellen zu können.

Die Prüflinge selbst sind selbstverständlich nicht Gegenstand der Prüfungsvorrichtung. Vielmehr wird die Prüfungsvorrichtung bereitgestellt, um die Oberfläche von Prüflingen (Bauteilen) entsprechend einem vorgegebenen Prüfplan oder vorgegebenen Prüfvorschriften zu kontrollieren. Ein jeweiliger Prüfling befindet sich in dem Moment, in dem die Prüfung vollzogen wird, am Prüfort.

Der Prüfort kann eine definierte festgelegte Position sein und sich innerhalb oder außerhalb der Kuppel (in letzterem Fall jedoch in enger Verbindung, insbesondere in Sichtverbindung zum Inneren der Kuppel) befinden. Ebenso ist es aber auch möglich, den Prüfort über einen größeren Bereich zu erstrecken (Prüfraum), so dass das zu prüfende Teil (der Prüfling) während seiner Bewegung verschiedenen Beleuchtungssituationen ausgesetzt ist, um Bilder mit variierter Beleuchtung zu erzeugen. Dementsprechend ist es nicht zwingend erforderlich, dass der Prüfling bei der Bilderfassung stillsteht. Eine Bilderfassung ist auch bei einem sich bewegenden Prüfling möglich.

Um die unterschiedlichen Beleuchtungssituationen realisieren zu können, können immer wieder neue Zuordnungen von einer der Beleuchtungsvorrichtungen und einer der Bilderfassungsvorrichtungen neu gebildet werden. Es werden somit jeweils immer wieder neue Paarungen gebildet.

Eine geeignete Steuervorrichtung kann vorgesehen sein, zum Ansteuern und damit Aktivieren der Bilderfassungsvorrichtungen und der Beleuchtungsvorrichtungen.

Als Beleuchtungssituationen haben sich insbesondere Situationen als geeignet erwiesen, bei denen ein Gegenlicht bzw. schräg einfallendes Gegenlicht (z.B. Streiflicht) oder auch Auflicht erzeugt wird, um auf diese Weise die Qualität bzw. Struktur der Prüflings-Oberfläche und deren Eigenschaften beurteilen zu können.

Durch die entsprechende (Gegenlicht-)Beleuchtungssituation kann die visuelle Prüfung durch Menschen simuliert werden, die den Prüfling gegen schräg von der Gegenseite einfallendes Licht (insbesondere Streiflicht) halten bzw. im schräg einfallenden Gegenlicht schwenken, um auf diese Weise die Oberflächenqualität besser beurteilen zu können.

Als besonders eignen sich Auflicht bzw. das Streiflicht für eine Oberflächenanalyse.

Mithilfe der Prüfvorrichtung können somit viele Bilder durch viele Bilderfassungsvorrichtungen bei variierter Beleuchtung erzeugt werden.

Eine Verbindungsachse zwischen der jeweils aktiven Beleuchtungsvorrichtung und dem Prüfort einerseits sowie eine Verbindungsachse zwischen der jeweils aktiven Bilderfassungsvorrichtung und dem Prüfort andererseits können in einem stumpfen Winkel zueinander stehen. Der Winkel kann zum Beispiel in einem Bereich zwischen 120° und weniger als 180° liegen. Auf diese Weise kann der erwünschte Gegenlicht- bzw. Streiflichteffekt erreicht werden.

Grundsätzlich kann der Winkel willkürlich festgelegt sein, so dass sämtliche Kombinationen von Beleuchtungsvorrichtung und Bilderfassungsvorrichtung möglich sind. Dementsprechend kann der Winkel auch in einem Bereich zwischen 0° und 180° liegen.

Die kuppelförmige Anordnung der Bilderfassungsvorrichtungen und der Beleuchtungsvorrichtungen kann die Form einer teilweisen Kugelschale aufweisen, zum Beispiel die Form einer Halbkugelschale. Diese Form ist aber nicht streng auf eine Halbkugel beschränkt, sondern kann sich auch bis zu einer Kugel erstrecken, mit wenigstens einer Öffnung zum Ein- und Ausbringen des Prüflings zum oder vom im Inneren der Kuppel bzw. Kugel gelegenen Prüfort. An der Innenseite der Kugelschale können die Bilderfassungsvorrichtungen und die Beleuchtungsvorrichtungen angeordnet sein.

Die jeweils unterschiedlichen Beleuchtungssituationen können dadurch bewirkt werden, dass die jeweils aktivierte Bilderfassungsvorrichtung und die jeweils aktivierte Beleuchtungsvorrichtung wenigstens teilweise in unterschiedlichen Winkeln zu einem am Prüfort vorgesehenen Prüfling stehen. Auf diese Weise sind jeweilige Paarungen mit unterschiedlichen Winkeln und damit unterschiedlichen Beleuchtungssituationen möglich.

Es ist eine Tragstruktur vorgesehen an der die Bilderfassungsvorrichtungen und die Beleuchtungsvorrichtungen in der kuppelförmigen Anordnung getragen werden. Die Tragstruktur kann insbesondere rahmenartig ausgebildet sein, um die Komponenten zu tragen. Mithilfe der Tragstruktur ist es insbesondere möglich, die Bilderfassungsvorrichtungen und die Beleuchtungsvorrichtungen als eine Kuppel aufzubauen und zu tragen.

Der ungefähre Durchmesser der Kuppel (z.B. ein Kugeldurchmesser) hängt von der Größe der bestimmungsgemäß zu prüfenden Teile ab. In der Praxis hat sich zum Beispiel eine Größe des Prüflings von maximal 200 mm bewährt. In diesem Fall kann der Kugeldurchmesser (Kuppeldurchmesser) bei ca. 800 mm liegen, was einen Innenraumdurchmesser von z.B. 600 mm erlaubt.

Ohne Weiteres sind aber auch andere Kuppelgrößen möglich, wenn größere oder kleinere Teile geprüft werden sollen.

Dementsprechend kann alternativ eine Prüfvorrichtung zum optischen Prüfen zum Oberflächen eines Prüflings angegeben werden, mit mehreren Bilderfassungsvorrichtungen, mehreren Beleuchtungsvorrichtungen und mit einem Prüfort, an dem ein zu prüfender Prüfling positionierbar ist, um einen Prüfvorrichtung durchzuführen, wobei die Bilderfassungsvorrichtungen und die Beleuchtungsvorrichtungen kuppelförmig um den Prüfort angeordnet sind, wobei jeweils eine der Bilderfassungsvorrichtungen und eine der Beleuchtungsvorrichtungen derart aktivierbar sind, dass die Beleuchtungsvorrichtung den Prüfling am Prüfort beleuchtet und die Bilderfassungsvorrichtung ein Bild des Prüflings am Prüfort erfasst, und wobei eine Tragstruktur vorgesehen ist, an der die Bilderfassungsvorrichtungen und die Beleuchtungsvorrichtungen in der kuppelförmigen Anordnung getragen werden.

Die Tragstruktur weist Ausnehmungen auf, in die Optikeinheiten einsetzbar sind, die jeweils eine Bilderfassungsvorrichtung und/oder eine Beleuchtungsvorrichtung aufweisen.

Die Optikeinheiten können ähnlich wie Kacheln als kompakte bauliche Einheiten aufgebaut sein, in denen alle erforderlichen Komponenten untergebracht sind. Dabei können die Optikeinheiten jeweils entsprechend gestaltete Gehäuse aufweisen, wobei alle Optikeinheiten-Gehäuse in der Prüfvorrichtung identisch sein können, was eine hohe Gleichteilanzahl erlaubt. Auf diese Weise können zum Beispiel jeweils eine Bilderfassungsvorrichtung und eine Beleuchtungsvorrichtung zu einer Optikeinheit zusammengefasst sein.

Die Optikeinheiten können in die entsprechenden Ausnehmungen in der Tragstruktur eingesetzt werden. Die Tragstruktur muss dementsprechend eine ausreichende Anzahl von Ausnehmungen aufweisen, um die Optikeinheiten in der gewünschten Anzahl aufnehmen zu können.

Wenigstens ein Teil der Optikeinheiten kann eine Beleuchtungsvorrichtung aufweisen, wobei die Beleuchtungsvorrichtung eine Mehrzahl von Beleuchtungselementen aufweisen kann, die flächig angeordnet sind. So ist es zum Beispiel möglich, eine Mehrzahl von Beleuchtungselementen in Form von LEDs flächig anzuordnen, um auf diese Weise eine Beleuchtungsvorrichtung zu bilden. Zur Vergleichmäßigung des Lichts kann vor den Beleuchtungselementen, also insbesondere zum Beispiel vor den LEDs auch noch ein Diffusorelement, zum Beispiel eine opake Platte, angeordnet sein.

Wenigstens ein Teil der Optikeinheiten kann zusätzlich zu der Beleuchtungsvorrichtung eine Bilderfassungsvorrichtung aufweisen. Dabei können die einzelnen Beleuchtungselemente der Beleuchtungsvorrichtung um die Bilderfassungsvorrichtung angeordnet sein. Die Bilderfassungsvorrichtung kann somit zentrisch, zum Beispiel in der Mitte des Diffusorelements, angeordnet sein.

Die Optikeinheiten können auf ihrer Innenseite eine Kontur in Form eines Teils einer Kugeloberfläche aufweisen. Die Innenseite kann entsprechend der gewünschten Kuppelform somit auch kugelförmig oder teil-kugelförmig ausgebildet sein.

Wenigstens ein Teil der Optikeinheiten weist eine dreieckige bzw. eine prismatische Grundform auf.

Die dreieckige Grundform kann insbesondere durch eine entsprechende Gestaltung des Gehäuses der Optikeinheiten erreicht werden. Mit Hilfe der dreieckigen Grundform lässt sich die gewünschte kugelartige Kuppel gut nachbauen.

Die dreieck- bzw. prismenförmigen Optikeinheiten können in einfacher Weise von außen in die Tragstruktur eingehängt bzw. in dieser befestigt werden. Ohne Veränderung der Tragstruktur kann somit die Ausstattung der Prüfvorrichtung dadurch angepasst werden, dass eine entsprechende Anzahl von kompakten Optikeinheiten in der Tragstruktur befestigt werden. Dabei können auch an sich für die Befestigung von Optikeinheiten eingerichtete Bereiche der Tragstruktur frei bleiben, wenn dort aufgrund der jeweiligen Prüfaufgabe oder Prüfkonstellation keine Optikeinheiten erforderlich sind.

Es kann eine Transportvorrichtung zum Transportieren des Prüflings zu dem Prüfort hin und weg von dem Prüfort vorgesehen sein. Die Transportvorrichtung kann somit geeignet sein, den Prüfling am Prüfort zu positionieren und dort auch für eine kurze Zeit fest zu positionieren, zum Beispiel entsprechend einer Taktung des Teil- bzw. Prüflings transports.

Die feste Positionierung des Prüflings, also das Festhalten des Prüflings am Prüfort sollte insbesondere für einen Zeitraum erfolgen, während dem eine Paarung aus einer Beleuchtungsvorrichtung und einer Bilderfassungsvorrichtung aktiviert ist, um ein Bild des Prüflings in einer bestimmten Beleuchtungssituation zu erfassen.

Das Transportieren des Prüflings kann horizontal oder auch vertikal erfolgen. Lediglich für den Moment der Bilderzeugung sollte der Prüfling im Stillstand stehen. Dabei ist insbesondere keine Bewegung des Prüflings im Licht erforderlich.

Die Transportvorrichtung ist insbesondere in der Lage, den Prüfling bzw. die zu prüfenden Teile in beliebiger Bewegung durch die kuppelförmige Prüfvorrichtung zu bewegen. Als Bewegungen eignen sich insbesondere horizontale, vertikale oder auch - bzw. ringförmige Bewegungen. Auch ein senkrechtes Fallenlassen des Prüflings und ein nachfolgendes Wiederauffangen ist möglich.

Um einen Transport der Prüflinge in das Innere der Kuppel zu ermöglichen, muss wenigstens eine Öffnung in der Kuppel vorgesehen sein, durch die die Transportvorrichtung ragt. Diese eine Öffnung dient dann gleichermaßen als Zuführungsöffnung und als Abführungsöffnung. Bei einer Variante können die Zuführungsöffnung und die Abführungsöffnung auch getrennt in der Kuppel ausgebildet sein.

Es wird ein Verfahren zum optischen Prüfen von Oberflächen eines Prüflings durch Ansteuern einer Prüfvorrichtung der obigen Art angegeben, mit den Schritten
a) Beleuchten eines Prüflings am Prüfort durch Aktivieren von mindestens einer der Beleuchtungsvorrichtungen;
b) Erfassen eines Bildes des Prüflings am Prüfort mit mindestens einer der Bilderfassungsvorrichtungen; und
c) mehrfaches Wiederholen der Schritte a) "Beleuchten" und b) "Erfassen" mit unterschiedlichen Kombinationen von Beleuchtungsvorrichtungen und Bilderfassungsvorrichtungen.

Für dieses Arbeitsverfahren kann zunächst der Prüfling zum Prüfort transportiert und dort gestoppt werden. Nacheinander erfolgt das Aktivieren der Beleuchtungsvorrichtungen und das Erfassen der Bilder mit den Bilderfassungsvorrichtungen (oder auch nur einer Bilderfassungsvorrichtung). So ist es möglich, die Bilder mit einer Bilderfassungsvorrichtung und unterschiedlichen Beleuchtungsvorrichtungen zu erfassen, oder mit mehreren Bilderfassungsvorrichtungen und einer (immer der gleichen) Beleuchtungsvorrichtung, oder mit verschiedenen Kombinationen von unterschiedlichen Beleuchtungsvorrichtungen und unterschiedlichen Bilderfassungsvorrichtungen.

Die Bilderfassungen erfolgen kurz nacheinander im Wechsel, mit dem Ziel, viele Bilder des Prüflings in kurzer Zeit zu erfassen. Dabei können die Anzahl der Wiederholungen und die jeweiligen Beleuchtungssituationen durch die jeweilige Prüfvorgabe bestimmt werden.

Nach Erfassen einer ausreichenden Anzahl von Bildern mit einer ausreichenden Anzahl von Beleuchtungssituationen kann der Prüfling vom Prüfort wegtransportiert werden und ein neuer Prüfling kann zum Prüfort gebracht werden.

Nach Abschluss von Schritt c) und damit Abschluss des mehrfachen Erfassens von Bildern des Prüflings mit unterschiedlichen Beleuchtungssituationen kann der Schritt erfolgen: Auswerten der als zweidimensionale Bilder erfassten Bilder durch Zusammenführen der Bilder in Form eines dreidimensionalen Oberflächenmodells des Prüflings. Somit kann aus der Vielzahl von Teilbildern mit unterschiedlichen Beleuchtungsszenarien ein Gesamtbild bzw. Ergebnisbild kombiniert werden, dass auf die Außenfläche eines virtuellen 3D-Teils aufgebracht werden kann. Durch die Kombination der Einzelbilder kann das virtuelle 3D-Teil mit dem Ergebnisbild quasi "bemalt" werden.

Es wird ein Verfahren zum optischen Prüfen von Oberflächen eines Prüflings angegeben, mit den Schritten
- Bereitstellen von mehreren Beleuchtungsvorrichtungen und mehreren Bilderfassungsvorrichtungen;
- Beleuchten des Prüflings durch eine der Beleuchtungsvorrichtungen und in dieser Beleuchtungssituation Erfassen eines Bildes des Prüflings durch eine der Bilderfassungsvorrichtungen;
- auf diese Weise nacheinander Erfassen mehrerer Bilder mit unterschiedlichen Beleuchtungsvorrichtungen und Bilderfassungsvorrichtungen in unterschiedlichen Beleuchtungssituationen; und
- Zusammenführen der auf diese Weise erfassten zweidimensionalen Bilder des Prüflings zu einem virtuellen dreidimensionalen Oberflächenbild des Prüflings.

Dabei sind, wie oben bereits erläutert, die Beleuchtungsvorrichtungen und die Bilderfassungsvorrichtungen fest positioniert. Auf diese Weise können Bilder vieler Kameras (Bilderfassungsvorrichtungen) bei variierter Beleuchtung erzeugt werden.

Aus den somit erzeugten zweidimensionalen Bildern kann ein einheitliches dreidimensionales Oberflächenbild durch Projektion auf ein virtuelles 3D-Teil erzeugt werden. Das virtuelle 3D-Objekt bekommt eine echte Oberfläche (Textur) "aufgemalt", wobei die Quelle für die echte Textur die Bilder der vielen Bilderfassungseinrichtungen bei variierter Beleuchtung sind.

Die einzelnen zweidimensionalen Bilder oder auch das virtuelle dreidimensionale Oberflächenbild können durch geeignete Bildverarbeitungsverfahren bearbeitet werden, zum Beispiel durch Scharfzeichnen, Weichzeichnen, Erhöhen des Kontrasts, um auf diese Weise Störungen oder Merkmale des Oberflächenbilds zu verstärken.

Es kann der Schritt vorgesehen sein: Auswerten des dreidimensionalen Oberflächenbilds durch ein deterministisches Bildauswertungsverfahren und/oder durch ein Bildauswertungsverfahren auf Basis von künstlicher Intelligenz. Dabei können an sich bekannte deterministische Auswertungsverfahren eingesetzt werden, zum Beispiel das Überschreiten eines Kontrastgrenzwertes innerhalb einer Oberfläche. Für Lösungen auf Basis von künstlicher Intelligenz kann das System auf typische Oberflächenfehler oder -merkmale trainiert werden, die bei entsprechenden Prüflingen typischerweise zu beobachten sind.

Die Erfindung lässt sich mit anderen Worten folgendermaßen beschreiben: Die Erfindung betrifft somit eine Art Halbkugelschale, deren Innenseite gekachelt ist aus vielen Kameras und vielen einzelnen Beleuchtungsvorrichtungen bzw. Beleuchtungselementen. Von dem kurz stillstehenden Prüfling wird eine Vielzahl von Aufnahmen gemacht, wobei dabei die Beleuchtungsvorrichtungen in geeigneter Weise nacheinander kurz aktiviert werden.

Im Ergebnis ergibt sich eine Vielzahl von Teilaufnahmen mit unterschiedlichen Beleuchtungssituationen bzw. Beleuchtungsszenarien. Die einzelnen Teilbilder können kombiniert werden, um auf diese Weise ein virtuelles 3D-Teil mit dem Ergebnisbild zu "bemalen". Das Ergebnisbild kann die optimal verstärkten Merkmale an seiner Oberfläche aufweisen und so eine Auswertung durch geeignete Systeme ermöglichen. Das virtuelle 3D-Teil trägt somit die Oberflächenmerkmale, die in Form der vielen Einzelbilder vom realen Prüfling dokumentiert wurden.

Das virtuelle 3D-Teil lässt sich beliebig abwickeln in ein resultierendes planares Projektionsbild. Auf dieses Bild, mit einem Gemisch aus den verstärkten Merkmalen und den normalen Fertigungsspuren auf der Oberfläche des Prüflings können entsprechende Fehlersuchalgorithmen angewendet werden.

Bei Einsatz eines KI-Systems auf der Basis von Deep Learning kann ein zweistufiges Verfahren mit tiefen neuronalen Netzen eingesetzt werden, welches zunächst die Fehler mit Hilfe eines Detektornetzes lokalisiert und danach die so gefundenen Objektmerkmale klassifiziert. Die beiden Stufen "Lokalisieren" und "Klassifizieren" können auch in einer integrierten Struktur realisiert werden.

Diese und weitere Vorteile und Merkmale der Erfindung werden nachfolgend anhand von Beispielen unter Zuhilfenahme der begleitenden Figuren näher erläutert. Es zeigen:
- **Fig. 1**: eine erfindungsgemäße Prüfvorrichtung mit einer halbkugelförmigen Kuppel in Perspektivansicht;
- **Fig. 2**: eine Variante zu der Prüfvorrichtung von Fig. 1;
- **Fig. 3**: eine Prüfvorrichtung mit Tragstruktur und Optikeinheiten;
- **Fig. 4**: die Tragstruktur von Fig. 3 ohne Optikeinheiten;
- **Fig. 5**: eine Optikeinheit in Perspektivdarstellung;
- **Fig. 6**: die Optikeinheit von Fig. 5 in einer anderen Ansicht in teilweiser Explosionsdarstellung;
- **Fig. 7**: ein Anwendungsbeispiel für eine erfindungsgemäße Prüfvorrichtung;
- **Fig. 8**: einen anderen Aufbau für eine Prüfvorrichtung;
- **Fig. 9**: eine weitere Variante einer Prüfvorrichtung; und
- **Fig. 10**: wiederum eine weitere Variante für eine Prüfvorrichtung.

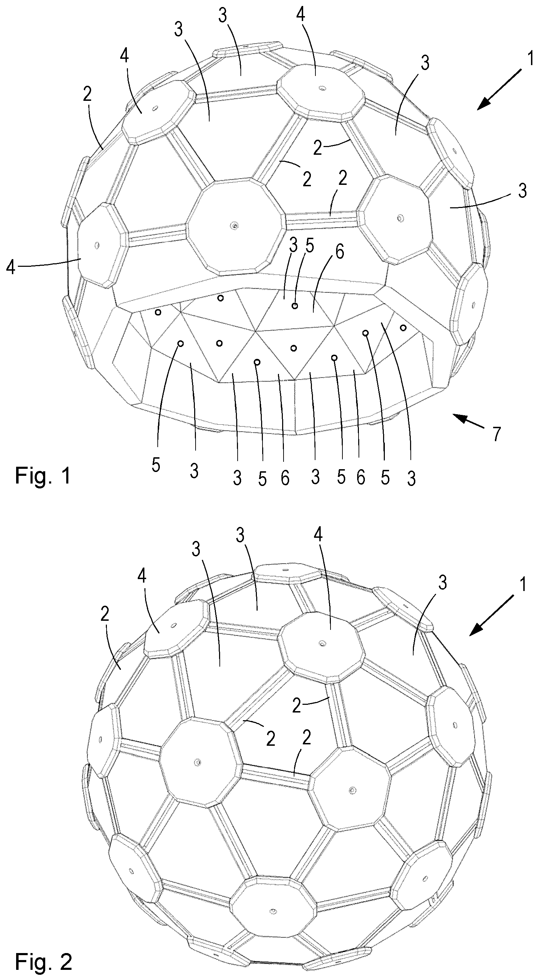

Fig. 1 zeigt eine kuppelartige Prüfvorrichtung in Perspektivdarstellung.

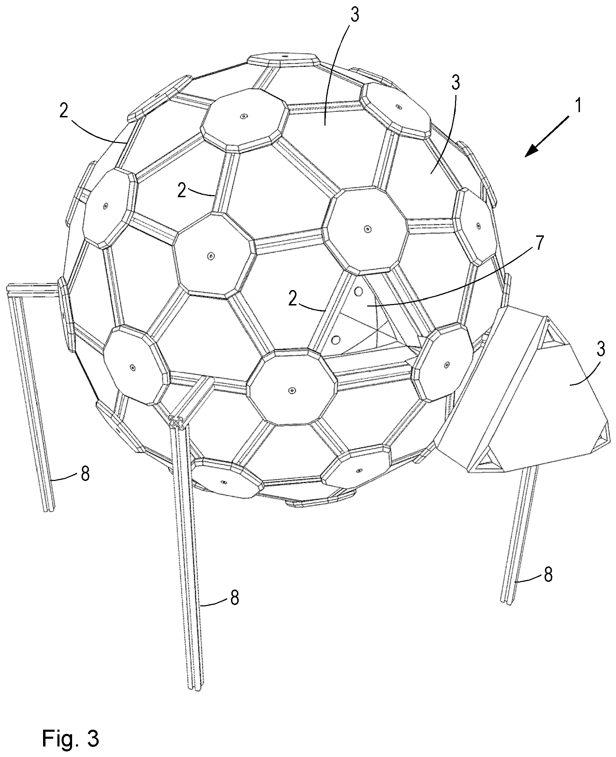

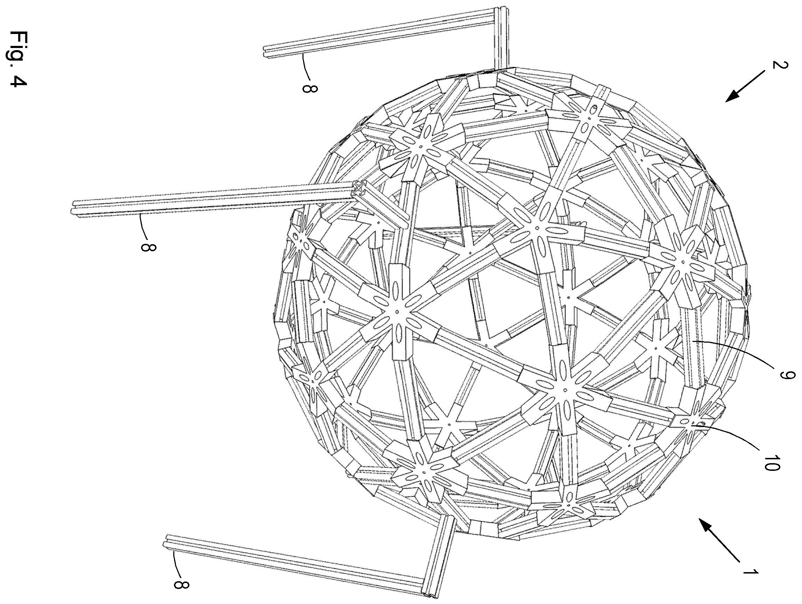

Die Prüfvorrichtung ist in Form einer halbkugelförmigen Kuppel 1 (kuppelförmige Anordnung) aufgebaut und weist eine Tragstruktur 2 mit vielen miteinander verbundenen Streben auf. Die Tragstruktur 2 wird später noch insbesondere anhand der Fig. 3 und 4 näher erläutert.

Zwischen den Streben der Tragstruktur 2 sind einzelne Optikeinheiten 3 aufgehängt und durch Halteelemente 4 an der Tragstruktur 2 befestigt. Wie in Fig. 1 gut erkennbar, entsteht durch den Aufbau aus Tragstruktur 2, Optikeinheiten 3 und Halteelementen 4 der halbkugelförmige Aufbau der Kuppel 1.

Die Halteelemente 4 sind plattenartig ausgebildet und können mit der Tragstruktur verschraubt werden.

Die jeweiligen Optikeinheiten 3 weisen auf ihrer innenliegenden Seite jeweils eine als Bilderfassungsvorrichtung dienende Kamera 5 und eine als Beleuchtungsvorrichtung dienende Beleuchtungsfläche 6 auf.

Die Optikeinheiten 3 sind dabei im Wesentlichen dreieckig aufgebaut, wobei die Kamera 5 in der Mitte des Dreiecks, etwa in der Nähe des Flächenschwerpunkts der dreieckigen Fläche angeordnet ist, wie in Fig. 1 gezeigt. Die Beleuchtungsfläche 6 umgibt die Kamera 5.

Bei den in Fig. 1 gezeigten Optikeinheiten 3 weist jede Optikeinheit 3 eine Kamera 5 und eine Beleuchtungsfläche 6 auf. Bei nicht dargestellten Varianten gibt es auch Optikeinheiten 3, die nur eine Kamera 5 oder nur eine Beleuchtungsfläche 6 aufweisen, also nicht eine Kamera 5 und eine Beleuchtungsfläche 6 in Kombination. Die Festlegung hinsichtlich der Ausstattung der Optikeinheiten 3 hängt von den jeweiligen Prüfungsaufgaben und -szenarien ab.

Da die Optikeinheiten 3 - wie auch schon aus Fig. 1 ersichtlich - sehr einfach jeweils von außen in die Tragstruktur 2 eingehängt und lediglich durch die Halteelemente 4 fixiert werden müssen, ist es einfach möglich, die Optikeinheiten 3 auch auszuwechseln, um die Prüfvorrichtung an andere Prüfaufgaben anzupassen. Dabei ist es auch möglich, die Optikeinheiten 3 durch Platzhalter bzw. "Dummies" zu ersetzen, also durch dreieckförmige Platten, die weder eine Kamera 5 noch eine Beleuchtungsfläche 6 tragen.

Die Kuppel 1 ist an ihrer Unterseite geöffnet, so dass dort eine Öffnung 7 ausgebildet ist. Die Öffnung 7 dient zur Zuführung eines nicht dargestellten Prüflings in das Innere der Kuppel 1 zu einem virtuellen Prüfort, der sich zum Beispiel in der geometrischen Mitte der halbkugelförmigen Kuppel 1 oder auch ober- oder unterhalb davon befinden kann.

Das Zu- und Abführen des zu prüfenden Teils (Prüflings) in das Innere der Kuppel 1 bzw. zum Prüfort kann mit Hilfe einer später noch erläuterten Transportvorrichtung erfolgen.

Wenn sich der Prüfling am Prüfort befindet, können die später noch erläuterten Bilder mit variierter Beleuchtung erzeugt werden.

Fig. 2 zeigt eine Variante zu der Prüfvorrichtung von Fig. 1, bei der die Kuppel 1 im Wesentlichen als Vollkugel verwirklicht ist.

Um jedoch einen Prüfling in das Innere der Kuppel 1 zum Prüfort bewegen zu können, ist auf der von Fig. 2 abgewandten Seite eine nicht dargestellte Öffnung vorhanden.

Fig. 3 zeigt eine Variante der Kuppel 1 von Fig. 2, bei der an der Tragstruktur 2 zusätzliche Stützbeine 8 vorgesehen sind. Selbstverständlich können die Stützbeine 8 auch in anderer Weise ausgeführt werden, um die Tragstruktur 2 mit der gesamten Prüfvorrichtung zuverlässig zu halten.

Bei der Darstellung von Fig. 3 ist zudem eine der Optikeinheiten 3 aus der Tragstruktur 2 entnommen. Hierbei wird der dreieckige Grundaufbau der Optikeinheiten 3 erkennbar. Zudem ist ein Blick in das Innere der Kuppel 1 an der Stelle möglich, wo die Optikeinheit 3 entnommen wurde.

Die durch das Weglassen der einen Optikeinheit 3 bewirkte Öffnung kann auch als Öffnung 7 zum Einbringen und Ausbringen von Prüflingen in das Innere der Kuppel 1 genutzt werden.

Fig. 4 zeigt die vollständige Tragstruktur 2 mit den Stützbeinen 8 sowie entsprechenden vielen Streben 9 und Knotenpunkten 10.

Die Streben 9 können zum Beispiel aus geraden Aluminiumprofilteilen hergestellt sein. Die Knotenpunkte 10 weisen entsprechend abgewinkelte Anschlussöffnungen auf, um die Streben 9 in einem Winkel zur Horizontalen einzustecken und um auf diese Weise durch einen Zusammenbau aller Streben 9 und aller Knotenpunkte 10 den gewünschten kugelförmigen Aufbau der Kuppel 1 zu erreichen.

An den Knotenpunkten 10 sind Gewindebohrungen vorgesehen, um die Halteelemente 4 zu verschrauben. Auf diese Weise können die Optikeinheiten 3 sicher in den jeweiligen dreieckigen Ausnehmungen, gebildet durch jeweils drei Streben 9 und drei Knotenpunkte 10 gehalten werden.

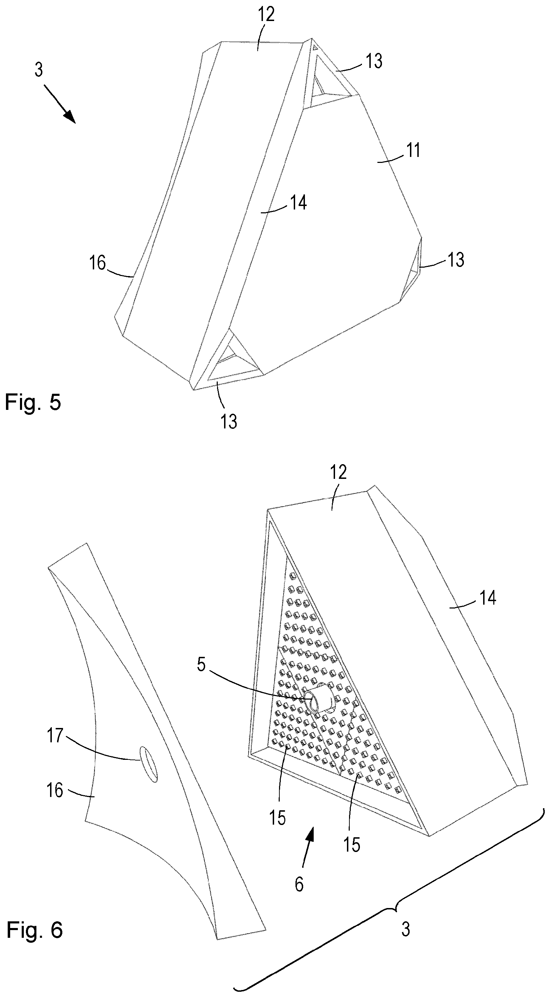

Fig. 5 zeigt eine Perspektivdarstellung einer Optikeinheit 3 in Außenansicht. Die Optikeinheit 3 weist ein Gehäuse 11 mit dreieckig zueinanderstehenden Seitenwänden 12 auf. In den Ecken des dreieckigen Aufbaus sind jeweilige Anschlussflächen 13 vorgesehen, an denen die Halteelemente 4 aufliegen, um die Optikeinheit 3 in der Tragstruktur 2 zu halten.

Zudem sind an der rückwärtigen bzw. außen liegenden Seite der Optikeinheit 3 angeschrägte Halteflächen 14 vorgesehen, mit denen sich die Optikeinheiten 3 passgenau in die dreieckigen Ausnehmungen der Tragstruktur 2 einfügen lassen.

Fig. 6 zeigt die in Fig. 5 dargestellte Optikeinheit 3 von der anderen Seite (Innenseite) in einer teilweisen Explosionsdarstellung.

Teil der Optikeinheit 3 ist die Kamera 5 und die Beleuchtungsfläche 6, die durch eine Vielzahl von flächenartig angeordneten, Beleuchtungselemente dienenden Leuchtdioden (LEDs) 15 gebildet wird.

Zur Vergleichmäßigung des von den Leuchtdioden 15 erzeugten Lichts ist über den Leuchtdioden 15 eine dreiecksförmige Diffusorplatte 16 angeordnet, die in ihrer Mitte eine Öffnung 17 für die Kamera 5 aufweist. In Fig. 6 ist die Diffusorplatte 16 von der restlichen Optikeinheit 3 getrennt dargestellt, um den Bereich der ansonsten durch die Diffusorplatte 16 abgedeckten Leuchtdioden 15 besser erkennen zu können.

Wie in den Fig. 5 und 6 gut erkennbar, ist die Diffusorplatte 16 zur Innenseite der Kuppel 1 hin kugelartig gekrümmt. Durch den Zusammenbau der Optikeinheiten 3 in der Tragstruktur 2 kann somit eine kugelartige Innenkontur erzeugt werden.

Die Optikeinheit 3 ist damit in der Lage, einerseits über die Beleuchtungsfläche 6 mit den vielen Leuchtdioden 15 und der Diffusorplatte 16 gleichmäßiges Licht von einer Seite zu erzeugen und damit einen im Inneren der Kuppel 1 an dem Prüfort gehaltenen Prüfling zu beleuchten. Mit Hilfe der Kamera 5 kann ein entsprechendes Bild aufgenommen werden. Da eine Vielzahl von Optikeinheiten 3 vorgesehen ist, können immer wieder neue Paarungen von Beleuchtungsflächen 6 und Kameras 5 aktiviert werden, um Bilder mit unterschiedlichen Beleuchtungssituationen zu erzeugen. Dabei kann es insbesondere von Interesse sein, Beleuchtungssituationen mit einer Art Gegenlicht oder schrägem Gegenlicht bzw. Auflicht oder Streiflicht zu erzeugen, um auf diese Weise die Oberflächenmerkmale des Prüflings besonders gut erkennen zu können.

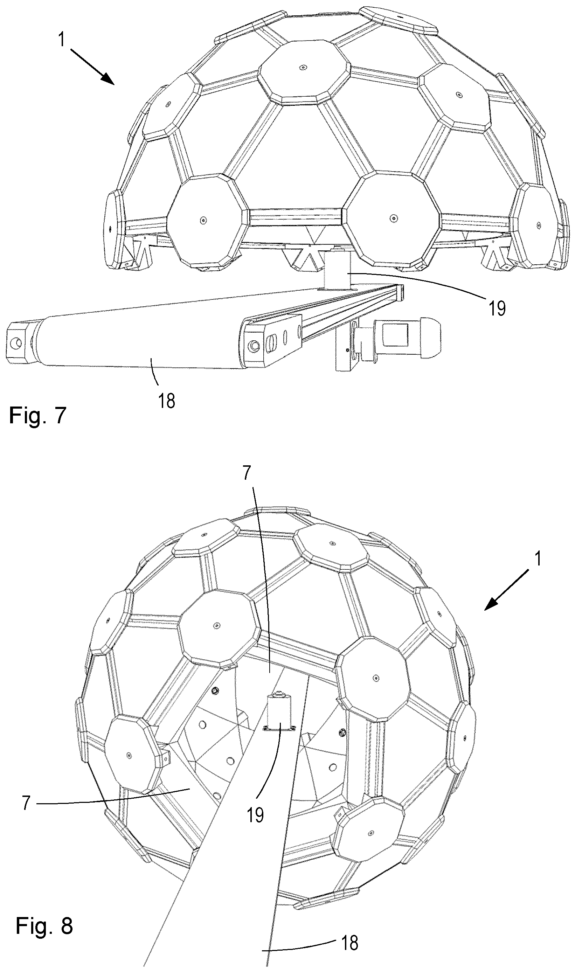

Fig. 7 zeigt ein als Transportvorrichtung 18 dienendes Förderband, das ein als Prüfling 19 dienendes Bauteil horizontal unter die Kuppel 1 fördert. In der in Fig. 7 gezeigten Situation befindet sich der Prüfling 19 etwa in dem Prüfort. In dieser Situation können die Bilder mit wechselseitig aktivierten Kameras 5 und Beleuchtungsflächen 6 erzeugt werden.

Fig. 8 zeigt eine Variante mit einer im Wesentlichen kugelförmigen Kuppel 1, die zwei Öffnungen 7 aufweist, von denen eine als Einlassöffnung und eine als Auslassöffnung dient. Die Transportvorrichtung 18 ist als durchgängiges Förderband dargestellt, das den Prüfling 19 horizontal durch die Kuppel 1 und damit auch durch den Prüfort führt.

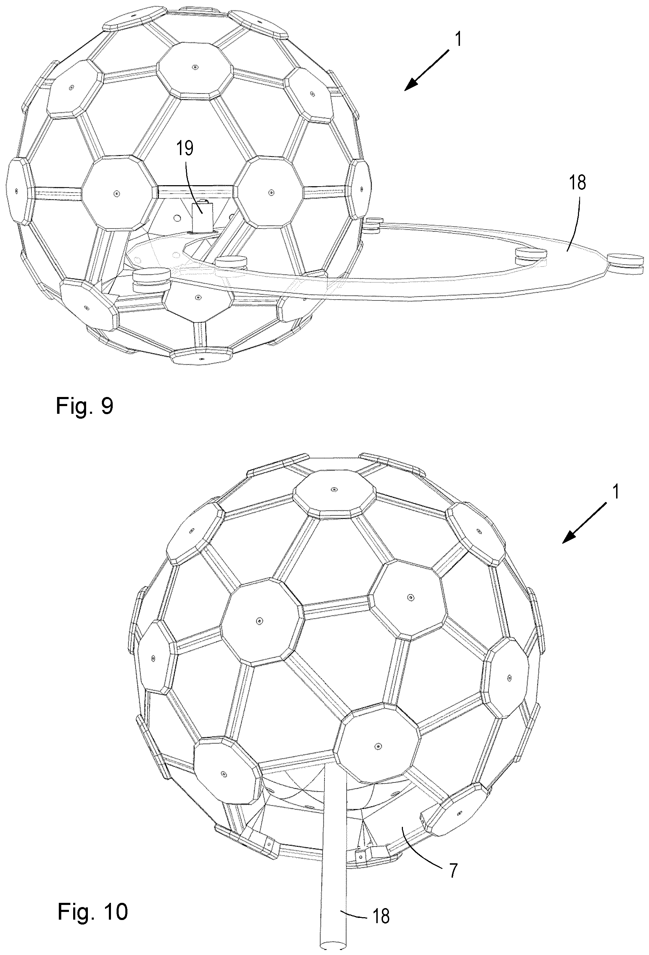

Fig. 9 zeigt eine weitere Variante mit einer kreisförmigen Transportvorrichtung 18, die den Prüfling 19 auf einer Kreisbahn durch das Innere der Kuppel 1 und eine entsprechende Einlassöffnung und eine Auslassöffnung bewegt.

Bei allen Varianten der Fig. 7 bis 9 ist es möglich, dass die Bewegung des Prüflings 19 getaktet erfolgt, also dass der Prüfling 19 im Prüfort kurz stehenbleibt, um die gewünschte Anzahl von Bildern mit unterschiedlichen Beleuchtungssituationen zu erzeugen. Alternativ ist es auch möglich, den Prüfling 19 kontinuierlich durch das Innere der Kuppel 1 zu bewegen und dabei die Bilder zu erstellen.

Fig. 10 zeigt eine weitere Variante, bei der die Kuppel 1 an ihrer Unterseite die Öffnung 7 aufweist, in die die Transportvorrichtung 18 in Form einer pneumatisch oder hydraulisch betätigten Hebebühne hineinragt. Der nicht dargestellte Prüfling 19 wird durch die Transportvorrichtung 18 von unten in das Innere der Kuppel 1 geführt und im Prüfort für die Erstellung der gewünschten Bilder gehalten. Danach bewegt die Transportvorrichtung 18 den Prüfling wieder nach unten, aus der Kuppel 1 heraus.

Bei einer Variante kann die Entnahme des Prüflings 19 auch oberhalb der Kuppel 1 erfolgen, so dass an der Oberseite der Kuppel 1 eine weitere Öffnung 7 vorgesehen sein muss.

## Patentansprüche

1. Prüfvorrichtung zum optischen Prüfen von Oberflächen eines Prüflings (19), mit
- mehreren Bilderfassungsvorrichtungen (5);
- mehreren Beleuchtungsvorrichtungen (6); und mit
- einem Prüfort, an dem ein zu prüfender Prüfling (19) positionierbar ist, um einen Prüfvorgang durchzuführen;
wobei
- die Bilderfassungsvorrichtungen (5) und die Beleuchtungsvorrichtungen (6) kuppelförmig um den Prüfort angeordnet sind;
- jeweils mindestens eine der Bilderfassungsvorrichtungen (5) und mindestens eine der Beleuchtungsvorrichtungen (6) derart aktivierbar sind, dass die Beleuchtungsvorrichtung (6) den Prüfling (19) am Prüfort beleuchtet und die Bilderfassungsvorrichtung (5) ein Bild des Prüflings (5) am Prüfort erfasst;
- durch eine Zuordnung von jeweils einer der Bilderfassungsvorrichtungen (5) und einer der Beleuchtungsvorrichtungen (6) und ihrer relativen Position zu dem Prüfling (19) am Prüfort eine bestimmte Beleuchtungssituation definiert ist;
- nacheinander mehrere oder alle der Bilderfassungsvorrichtungen (5) und wenigstens eine oder nacheinander mehrere oder alle der Beleuchtungsvorrichtungen (6) derart aktivierbar sind, dass durch die Bilderfassungsvorrichtungen (5) insgesamt eine Vielzahl von Bildern des Prüflings in unterschiedlichen Beleuchtungssituationen erfassbar ist;
- eine Tragstruktur (2) vorgesehen ist, an der die Bilderfassungsvorrichtungen (5) und die Beleuchtungsvorrichtungen (6) in der kuppelförmigen Anordnung (1) getragen werden;
- die Tragstruktur (2) dreieckige Ausnehmungen aufweist, in die Optikeinheiten (3) von außen einsetzbar sind, die jeweils eine Bilderfassungsvorrichtung (5) und/oder eine Beleuchtungsvorrichtung (6) aufweisen;
- wenigstens ein Teil der Optikeinheiten (3) eine dreieckige Grundform aufweist; und wobei
- an der außen liegenden Seite einer jeweiligen Optikeinheit (3) angeschrägte Halteflächen (14) vorgesehen sind, mit denen sich die Optikeinheiten (3) passgenau in die dreieckigen Ausnehmungen der Tragstruktur (2) einfügen lassen.

2. Prüfvorrichtung nach Anspruch 1, wobei eine Verbindungsachse zwischen der jeweils aktiven Beleuchtungsvorrichtung (6) und dem Prüfort sowie eine Verbindungsachse zwischen der jeweils aktiven Bilderfassungsvorrichtung (5) und dem Prüfort in einem stumpfen Winkel zueinander stehen.

3. Prüfvorrichtung nach einem der vorstehenden Ansprüche, wobei die kuppelförmige Anordnung (1) die Form einer teilweisen Kugelschale aufweist.

4. Prüfvorrichtung nach einem der vorstehenden Ansprüche, wobei die jeweils unterschiedlichen Beleuchtungssituationen dadurch bewirkt werden, dass die jeweils aktivierte Bilderfassungsvorrichtung (5) und die jeweils aktivierte Beleuchtungsvorrichtung (6) wenigstens teilweise in unterschiedlichen Winkeln zu einem am Prüfort vorgesehen Prüfling (19) stehen.

5. Prüfvorrichtung nach einem der vorstehenden Ansprüche, wobei
- wenigstens ein Teil der Optikeinheiten (3) eine Beleuchtungsvorrichtung aufweist (6); und wobei
- die Beleuchtungsvorrichtung (6) eine Mehrzahl von Beleuchtungselementen (15) aufweist, die flächig angeordnet sind.

6. Prüfvorrichtung nach einem der vorstehenden Ansprüche, wobei wenigstens ein Teil der Optikeinheiten (3) zusätzlich zu der Beleuchtungsvorrichtung (6) eine Bilderfassungsvorrichtung (5) aufweist.

7. Prüfvorrichtung nach einem der vorstehenden Ansprüche, wobei eine Transportvorrichtung (18) zum Transportieren des Prüflings (19) zu dem Prüfort und weg von dem Prüfort vorgesehen ist.

## Claims

1. Inspection device for optically checking surfaces of an inspection object (19), with
- a plurality of image-capturing devices (5);
- a plurality of illuminating devices (6); and with
- an inspection location at which an inspection object (19) to be inspected can be positioned in order to carry out an inspection process;
wherein
- the image-capturing devices (5) and the illuminating devices (6) are arranged in a dome shape around the inspection location;
- at least one of each of the image-capturing devices (5) and the illuminating devices (6) can be activated such that the illuminating device (6) illuminates the inspection object (19) at the inspection location and the image-capturing device (5) captures an image of the inspection object (5) at the inspection location;
- a specific illumination situation is defined by assigning one of each of the image-capturing devices (5) and the illuminating devices (6) and their relative positions to the inspection object (19) at the inspection location;
- consecutively a plurality or all of the image-capturing devices (5) and at least one or consecutively a plurality or all of the illuminating devices (6) can be activated such that overall a multiplicity of images of the inspection object can be captured by the image-capturing devices (5) in different illumination situations;
- a support structure (2) is provided on which the image-capturing devices (5) and the illuminating devices (6) are supported in the dome-shaped arrangement (1);
- the support structure (2) has triangular recesses into which the optical units (3) can be inserted from outside, each having an image-capturing device (5) and/or an illuminating device (6);
- at least part of the optical units (3) has a triangular basic shape; and wherein
- sloped holding surfaces (14) are provided on the outer side of each optical unit (3), with which holding surfaces the optical units (3) can be secured, perfectly fitting, in the triangular recesses of the support structure (2).

2. Inspection device according to claim 1, wherein a connecting axis between each active illuminating device (6) and the inspection location, and a connecting axis between each active image-capturing device (5) and the inspection location, are at acute angles to one another.

3. Inspection device according to one of the preceding claims, wherein the dome-shaped arrangement (1) has the shape of a partial ball socket.

4. Inspection device according to one of the preceding claims, wherein each of the different illumination situations is caused by each activated image-capturing device (5) and each activated illuminating device (6) being at least partially at different angles to an inspection object (19) provided at the inspection location.

5. Inspection device according to one of the preceding claims, wherein
- at least part of the optical units (3) has an illuminating device (6); and wherein
- the illuminating device (6) has a plurality of illuminating elements (15) which are arranged flat.

6. Inspection device according to one of the preceding claims, wherein at least part of the optical units (3) has an image-capturing device (5) in addition to the illuminating device (6).

7. Inspection device according to one of the preceding claims, wherein a transport device (18) is provided for transporting the inspection object (19) to the inspection location and away from the inspection location.

## Revendications

1. Dispositif de contrôle pour le contrôle visuel de surfaces d'un objet à contrôler (19), comprenant
- plusieurs dispositifs de capture d'image (5) ;
- plusieurs dispositifs d'éclairage (6) ; et comprenant
- un emplacement de contrôle, sur lequel un objet à contrôler (19) peut être positionné pour effectuer une opération de contrôle ; dans lequel
- les dispositifs de capture d'image (5) et les dispositifs d'éclairage (6) sont disposés en forme de dôme autour de l'emplacement de contrôle ;
- l'un au moins des dispositifs de capture d'image (5) et l'un au moins des dispositifs d'éclairage (6) respectivement peuvent être activés de telle manière que le dispositif d'éclairage (6) éclaire l'objet à contrôler (19) sur l'emplacement de contrôle et le dispositif de capture d'image (5) capture une image de l'objet à contrôler (5) sur l'emplacement de contrôle ;
- une situation d'éclairage déterminée est définie par une affectation à chaque fois d'un des dispositifs de capture d'image (5) et d'un des dispositifs d'éclairage (6) et de leur position relative à l'objet à contrôler (19) sur l'emplacement de contrôle ;
- plusieurs des dispositifs de capture d'image (5) peuvent être activés les uns après les autres, ou tous, et au moins un des dispositifs d'éclairage (6), ou plusieurs les uns après les autres, ou tous, de telle manière qu'une pluralité d'images de l'objet à contrôler puisse être détectée dans différentes situations d'éclairage par les dispositifs de détection d'image (5) ensemble ;
- une structure porteuse (2) est prévue, sur laquelle sont portés les dispositifs de capture d'image (5) et les dispositifs d'éclairage (6) dans l'agencement en forme de dôme (1) ;
- la structure porteuse (2) présente des évidements triangulaires, dans lesquels des unités optiques (3) peuvent être insérées depuis l'extérieur, qui présentent chacune un dispositif de capture d'image (5) et/ou un dispositif d'éclairage (6) ;
- une partie au moins des unités optiques (3) présente une forme de base triangulaire ; et dans lequel
- des surfaces de maintien biseautées (14) sont prévues sur le côté extérieur d'une unité optique (3) respective, avec lesquelles les unités optiques (3) peuvent être insérées avec précision dans les évidements triangulaires de la structure porteuse (2).

2. Dispositif de contrôle selon la revendication 1, dans lequel un axe de liaison entre le dispositif d'éclairage (6) actif respectif et l'emplacement de contrôle ainsi qu'un axe de liaison entre le dispositif de capture d'image (5) respectivement actif et l'emplacement de contrôle sont situés à un angle obtus l'un par rapport à l'autre.

3. Dispositif de contrôle selon l'une des revendications précédentes, dans lequel l'agencement en forme de dôme (1) présente la forme d'une cuvette sphérique partielle.

4. Dispositif de contrôle selon l'une des revendications précédentes, dans lequel les situations d'éclairage différentes sont chacune provoquées par le fait que le dispositif de capture d'image (5) respectivement activé et le dispositif d'éclairage (6) respectivement activé se trouvent en partie au moins à des angles différents par rapport à un objet à contrôler (19) prévu sur l'emplacement de contrôle.

5. Dispositif de contrôle selon l'une des revendications précédentes, dans lequel
- une partie au moins des unités optiques (3) présente un dispositif d'éclairage (6) ; et dans lequel
- le dispositif d'éclairage (6) présente une multitude d'éléments d'éclairage (15) qui sont disposés à plat.

6. Dispositif de contrôle selon l'une des revendications précédentes, dans lequel une partie au moins des unités optiques (3) présente, en plus du dispositif d'éclairage (6), un dispositif de capture d'image (5).

7. Dispositif de contrôle selon l'une des revendications précédentes, dans lequel un dispositif de transport (18) est prévu pour transporter l'objet à contrôler (19) jusqu'à l'emplacement de contrôle et à l'écart de l'emplacement de contrôle.
